# EUROPEAN PATENT APPLICATION

(11) **EP 4 685 092 A1**
(43) Date of publication of application: **28.01.2026**
(21) Application number: 24306232.0
(22) Date of filing: 23.07.2024
(51) Int. Cl.: B65G 54/02

(54) **TRANSPORT SYSTEM**

(71) Applicant: SCHNEIDER ELECTRIC INDUSTRIES SAS, 92500 Rueil-Malmaison (FR)
(72) Inventor: OCHIAI, Satoshi, Aichi 461-0004 (JP)
(74) Representative: Manitz Finsterwald Patent- und Rechtsanwaltspartnerschaft mbB

(57) **Abstract**

A transport system comprises a plurality of linear motors, which are arranged in a row and have a first guide track, a curved second guide track, wherein the curvature of the second guide track is constant, at least one transport unit which has a transport element that is movable in a movement direction along the first guide track by means of the linear motors, and a carrying element configured to be moved along with the transport element in the movement direction as the transport element travels along the first guide track, wherein the carrying element is moveable relative to the transport element in a transverse direction that extends transversely to the movement direction, and wherein the carrying element is guided at the second guide track, and a control unit configured to control the linear motors for moving the transport units along the first guide track.

## Description

The invention relates to a transport system, in particular a multi-carrier-system, and to a method of operating a transport system.

Such transport systems have a plurality of linear motors, also designated as segments, that are arranged in a row and that define a guide track for moving transport units or transport elements along the guide track. The linear motors can move, stop, accelerate and decelerate the transport units individually so that transport units can carry products or items along the guide track between defined stations in an assembly line. The guide tracks are usually made up of straight sections and curved sections.

Under certain circumstances, it may be desired to move the products or items along a circular path. This may be the case when the transport system is intended to replace a rotary table and to cooperate with machines in the assembly line that have previously cooperated with the rotary table and are therefore arranged in a circle around the transport system. Moreover, a circular path keeps the centrifugal force acting on the products or items constant. Thus, the products or items are less prone to fall off the transport units.

However, with the available segments being usually a mixture of straight and curved segments, it is sometimes not possible to define a circular guide track. Generally, the segments could be redesigned to enable the creation of a circular guide track. However, a redesign is costly and time-consuming.

It is therefore an object of the present invention to provide a transport system and a method of operating a transport system that allow carrying products or items along a guide track that is independent of the design of the segments, at low cost and little effort.

This object is satisfied by a transport system having the features of claim 1 and by a method of operating a transport system having the features of claim 13. Advantageous embodiments are defined in the dependent claims and result from the specification and the drawings.

According to one aspect, the invention relates to a transport system, in particular a multi-carrier-system. The transport system comprises a plurality of linear motors which are arranged in a row and have a first guide track, a curved second guide track, wherein the curvature of the second guide track is constant, and at least one transport unit which has a transport element that is movable in a movement direction, which may be clockwise or anti-clockwise, along the first guide track by means of the linear motors, and a carrying element configured to be moved along with the transport element in the movement direction as the transport element travels along the first guide track, wherein the carrying element is moveable relative to the transport element in a transverse direction that extends transversely to the movement direction, and wherein the carrying element is guided at the second guide track. The transport system further comprises a control unit configured to control the linear motors for moving the transport unit along the first guide track.

Within this specification, linear motors may also be referred to as segments. Similarly, the transport units can also be referred to as carriers.

The first guide track and the second guide track differ at least partly, which not only means that they are physically two different guide tracks, but also that they are at least partly different in terms of their course, i.e. at least partly have a different course. In other words, the first guide track and the second guide track are not congruent, at least not over their entire course, if they were to be superimposed, for example.

The movement direction and the transverse direction in particular refer to a co-moving coordinate system of the transport element. The transverse direction here refers to a direction transverse, i.e. orthogonal, to the movement direction. The transverse direction can in particular be the direction in which the centrifugal force acts. The movement direction can also be designated as the X direction and the transverse direction can also be designated as the Y direction. A third Z direction in the coordinate system moving with the transport element extends orthogonally to the X direction and the Y direction. The Z direction can in particular correspond to the vertical direction when the transport element moves horizontally.

That the carrying element is moveable relative to the transport element in the transverse direction means that the movement of the carrying element relative to the transport element has at least one movement component in the transverse direction. It is not necessary for the movement to take place precisely and exclusively in the transverse direction. Particularly, the carrying element can be slideably mounted to the transport element in the transverse direction.

Each linear motor can in particular have six outer surfaces, namely an upper side, a lower side, an outer side, an inner side, and two side surfaces. In this respect, the side surfaces of adjacent linear motors are spaced apart from one another by a small expansion gap of approximately 0.1 mm to 0.2 mm or directly contact one another. The guide track for the transport elements can be formed at the outer side. The inner side is arranged in the region of an inner space of the transport system.

The transport elements are in particular magnetically driven. For this purpose, the transport elements have one or more permanent magnets that are acted on by a driving force by means of a changing and/or wandering magnetic field generated by the linear motors. The drive force leads to a movement of the transport elements in the movement direction along the first guide track. The transport elements can in particular be moved independently and separately from one another. By means of the carrying elements, transport items, such as workpieces, products or items, can be transported with the respective transport unit.

The second guide track can particularly be arranged at the outer side of the segments. The second guide track may be disposed radially outward from the first guide track. The second guide track can be mechanically mounted to the segments or to at least some of the segments. However, it is also possible that the second guide track is attached to a separate device or to a part of a building such as walls or a bottom.

According to the invention, the curvature of the second guide track is constant. For example, when a carrying element travels along the second guide track with a constant velocity, the centrifugal force acting on the carrying element and on items or products carried by the carrying element is constant.

Moreover, by providing a second guide track with a constant curvature, it can be refrained from adapting the design of the segments. Therefore, providing the second guide track for guiding the carrying element contributes to a very cost-efficient solution that can be achieved with comparably little effort.

The second guide track may be circular in top view. In particular, the second guide track can be a closed, full circle in top view.

In a preferred embodiment, the first guide track has straight and/or curved track segments, whereas the second guide track is curved. Thus, a distance in the transverse direction between the first guide track and the second guide track may vary along the tracks. With the first guide track having straight and curved track segments, the first guide track can be assembled together by using segments that are usually available in a modular design. The second guide track can particularly be designed so as to surround the first guide track.

The carrying element may be rotatable relative to the transport element about an axis which is normal to a plane of movement defined by the movement direction and the transverse direction. This enables that the carrying element is not only moveable relative to the transport element in the transverse direction, but also rotatable relative to the transport element about the axis, at least to a certain degree. The maximum angle of relative rotation can be adjusted individually as needed. The relative rotation is helpful to quickly compensate for changes in movement of the transport element relative to the carrying element, for example at a transition from a straight segment to a curved segment of the first guide track.

The transport system or the multi-carrier system can be formed so that the linear motors form a closed first guide track along which the transport unit or the transport units can theoretically be endlessly moved in the same direction. However, it is also possible for the linear motors to form an open first guide track with a starting point and an end point. The second guide track can be a closed guide track or an open guide track, too.

Preferably, the second guide track comprises a rail, and the carrying element has rollers that roll along the rail, wherein the carrying element particularly has at least one roller on opposite sides of the rail. The rail particularly forms the second guide track. When the carrying element is moved by the transport element, its rollers move along the rail so that the carrying element is guided to move along the second track.

One of the carrying element and the transport element may comprise a long hole, and the other one of the carrying element and the transport element may comprise a pin that extends into the long hole to permit the relative movement of the carrying element to the transport element in the transverse direction. Thus, the long hole serves to absorb distance differences between the first guide track and the second guide track. Particularly, the pin may extend vertically when the plane of movement is a horizontal plane.

The transport system can include two of the transport units which together are referred to as a pair of transport units. The pair of transport units may travel along the guide tracks synchronously with a predetermined gap being maintained between the two transport units. The predetermined gap may be set individually as needed. The predetermined gap may be defined between the carrying elements of the pair of transport units. Synchronously means that the pair of transport units essentially travels at the same velocity at any time so that the predetermined gap can be maintained between the two transport units. This allows that a product or item can be transported picked by the carrying elements of the two transport units.

Preferably, the first guide track has straight and curved track segments, and the control unit is configured to control the linear motors to decelerate the transport units at a transition from a straight track segment to a curved track segment and to accelerate the transport units at a transition from a curved track segment to a straight track segment. When the transport element of a transport unit transitions from a straight segment to a curved segment, the change of the movement direction at constant velocity involves an acceleration of the carrying element at the second guide track. In order to compensate this acceleration, the transport units are decelerated. On the other hand, the transition from a curved track segment to a straight track segment involves a deceleration of the carrying element at the second guide track. Consequently, the transport units are accelerated to compensate this. The deceleration and acceleration are particularly helpful to ensure that the carrying elements of a pair of transport units moves synchronously along the second guide track.

According to another aspect, the invention relates to a method of operating a transport system, in particular a multi-carrier-system, the transport system comprising a plurality of linear motors, which are arranged in a row and have a first guide track, a curved second guide track, wherein the curvature of the second guide track is constant, at least one transport unit which has a transport element that is movable in a movement direction along the first guide track by means of the linear motors, and a carrying element configured to be moved along with the transport element in the movement direction as the transport element travels along the first guide track, wherein the carrying element is moveable relative to the transport element in a transverse direction that extends transversely to the movement direction, and wherein the carrying element is guided at the second guide track, and a control unit. The method comprises controlling the linear motors for moving the transport unit along the first guide track.

Preferably, the transport system comprises at least two of the transport units which together are a pair of transport units, wherein the method comprises controlling the linear motors so as to move the pair of transport units to travel along the guide tracks synchronously with a predetermined gap being maintained between the two transport units, in particular between the carrying elements of the pair of transport units.

Further, the first guide track may have straight and curved track segments, wherein the method comprises controlling the linear motors to decelerate the transport units at a transition from a straight track segment to a curved track segment and to accelerate the transport units at a transition from a curved track segment to a straight track segment.

It must be noted that features, details and advantages mentioned above in relation to the transport system also apply to the method of operating a transport system and vice-versa, even if the description does not mention this individually.

In the following, the invention will be described with reference to an exemplary embodiment which is schematically depicted in the drawings. In the drawings,
- Fig. 1: shows an embodiment of a multi-carrier-system in top view,
- Fig. 2: shows another top view of the multi-carrier-system of Fig. 1, and
- Fig. 3: shows an enlarged view of detail A in Fig. 2.

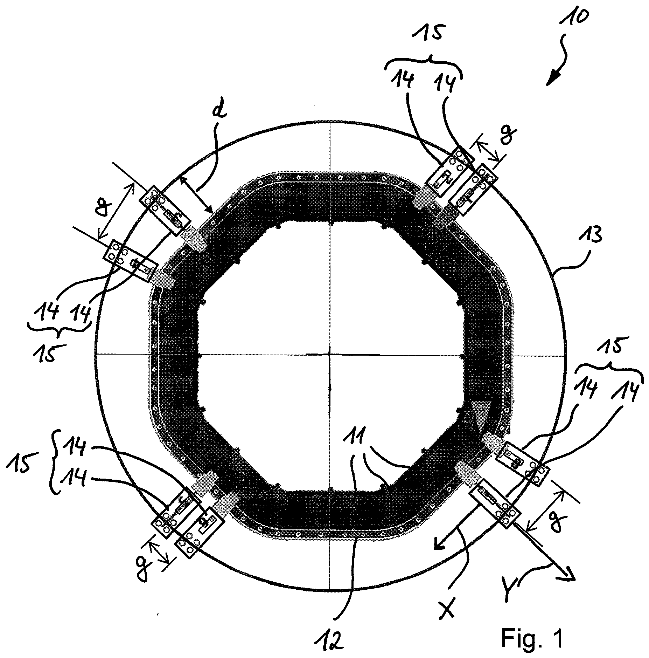

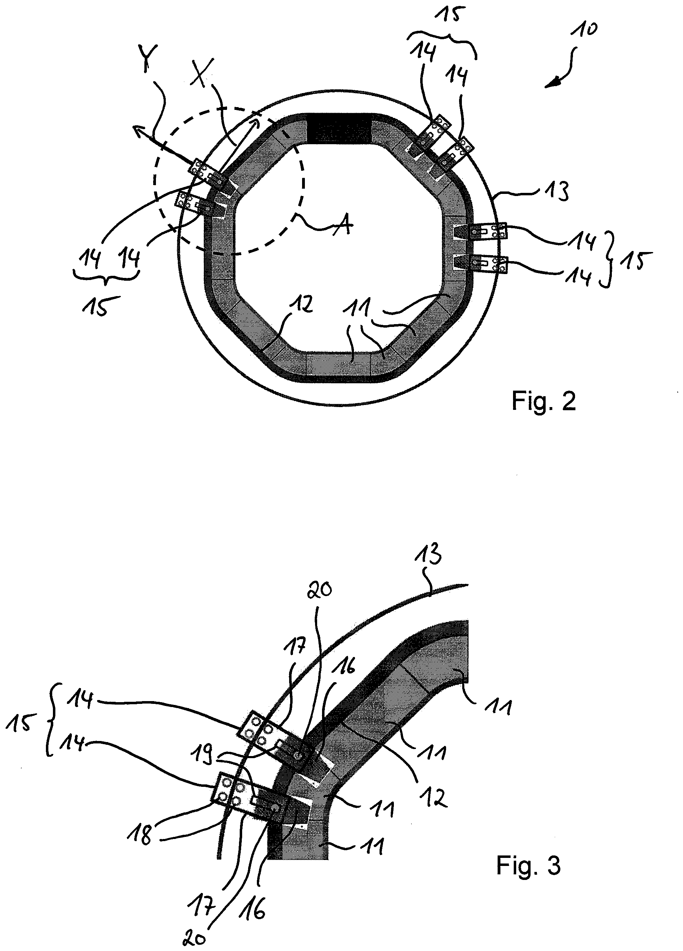

In Figs. 1 and 2, a transport system 10 is shown in top view, which is embodied as a multi-carrier-system. The transport system 10 has a plurality of straight and curved linear motors 11, which are arranged in a row so as to define a closed first guide track 12. As shown in Figs. 1 and 2, the first guide track 12 has a generally polygonal shape in top view with rounded corners. However, the first guide track 12 may instead be an open guide track with an end and a beginning, and may have any other shape defined by the kind and order of linear motors 11.

Furthermore, the transport system comprises a second guide track 13, which has a constant curvature along its entire extension. In this embodiment, the second guide track 13 is a closed track, too. Thus, the second guide track 13 is embodied as a full circle. The second guide track 13 comprises a rail which is not shown in detail. The second guide track 13 may be mounted to at least some of the linear motors. Otherwise, the second guide track 13 may instead also be mounted to a different device or to a part of a building such as a floor or a wall.

Several transport units 14 are provided which may travel along the tracks 12, 13. The transport units 14 respectively comprise a transport element 16 and a carrying element 17. The transport elements 16 can travel long the first guide track 12 by means of the linear motors 11, i.e. they are guided, for example, by a rail defining the first guide track 12 and magnetically driven by the linear motors 11. The transport elements 16 respectively have one or more permanent magnets (not shown) that are acted on by a driving force by means of a changing and/or wandering magnetic field generated by the linear motors 11. The drive force leads to a movement of the transport elements 16 in a movement direction X along the first guide track 12. The transport elements 16 can be moved independently and separately from one another. In Fig. 1, the movement direction X is shown as clockwise, but may instead also be anti-clockwise.

As the transport elements 16 travel in the movement direction X, the respective carrying elements 17 are moved along with the transport element 16 due to a mechanical connection. In the present embodiment, as can be seen in Fig. 3, the transport elements 16 have a pin 20 that extends into a long hole 19 formed at the carrying elements 17. Through the pin 20 and the long hole 19, the transport elements 16 take the respective carrying elements 17 with them as they travel along the first guide track. At the same time, the long hole 19 ensures that the carrying element 17 is moveable relative to the transport element 16 in a transverse direction Y which is transverse to the movement direction X. Thereby, the change to a distance d between the guide tracks 12, 13 due to their different shapes can be compensated. Moreover, the carrying element 17 is rotatable relative to the transport element 16 about an axis which is normal to a plane of movement of the transport unit 14 defined by the movement direction X and the transverse direction Y. The axis is also the symmetry axis of the pin 20.

The carrying element 17 comprises rollers 18 which roll along the rail of the second guide track 13. Rollers 18 are provided on opposite sides of the rail. In the present embodiment, each carrying element 17 comprises four rollers 18, two on each side of the rail. By means of the carrying elements 17, transport items such as workpieces, products or items, can be transported with the respective transport unit 14.

The transport system 10 also comprises a control unit (not shown) which controls the linear motors 11 for moving the transport units 14 along the first guide track 12. When the transport elements 16 travel along the first guide track 12, the respective carrying elements 17 move together with the transport elements 16. Due to the rollers 18, the carrying elements 17 follow the second guide track 13. Thus, the trajectory of the carrying elements 17, on which transport items may be placed, is a circle with a constant curvature. This is advantageous particularly when the transport system 10 is intended to replace a rotary table and to cooperate with machines in the assembly line that have previously cooperated with the rotary table and are therefore arranged in a circle around the transport system 10. Moreover, the circular trajectory keeps the centrifugal force acting on the products or items constant.

As can be seen, in the present embodiment, the transport units 14 move as pairs 15 of transport units with each pair 15 consisting of two transport units 14 in the present embodiment. The transport units 14 of each pair 15 travel together synchronously which means that a predetermined gap g is maintained between the respective carrying elements 17 of the transport units 14 of each pair 15, i.e. one predetermined gap g is assigned to each pair 15. Other than traveling in pairs 15 as disclosed here, the transport units 14 may also travel in groups of more than two transport units 14.

As can be seen in Fig. 1, the gap g may be different for the pairs 15. That means that each pair has an individual gap g. The gap g may for example be predetermined to be in a range of 50 mm to 350 mm, preferably 100 mm to 200 mm.

Since the transport units 14 of each pair 15 travel synchronously, this means that the respective carrying elements 17 can together carry an item or product. However, when a transport element 16 of a transport unit 14 reaches a transition between a straight segment and a curved segment, this means that the change of the movement direction X at constant velocity involves an acceleration of the associated carrying element 17 at the second guide track 13. In order to compensate this acceleration, the transport units 14 are decelerated at the transition. Likewise, the transition from a curved track segment to a straight track segment involves a deceleration of the carrying element 17 at the second guide track 13 so that the transport units 14 are accelerated at the transition to compensate this. The deceleration and acceleration, respectively, ensure that the carrying elements 17 of a pair 15 of transport units moves synchronously along the second guide track 13.

With the present invention, a guidance of the carrying elements 17 can be achieved that follows a path with constant curvature. At the same time, this can be achieved independently of the design of the segments, and particularly at low cost and with little effort. Therefore, the available linear motors can be easily used to provide a product adapted well to the customer's demand.

### List of reference signs

- 10: transport system
- 11: linear motor
- 12: guide track
- 13: guide track
- 14: transport unit
- 15: pair of transport unit
- 16: transport element
- 17: carrying element
- 18: roller
- 19: long hole
- 20: pin

- d: distance
- g: predetermined gap
- X: movement direction
- Y: transverse direction

## Claims

1. A transport system (10), in particular a multi-carrier-system, comprising a plurality of linear motors (11), which are arranged in a row and have a first guide track (12),
a curved second guide track (13), wherein the curvature of the second guide track (13) is constant,
at least one transport unit (14) which has a transport element (16) that is movable in a movement direction (X) along the first guide track (12) by means of the linear motors (11), and a carrying element (17) configured to be moved along with the transport element (16) in the movement direction (X) as the transport element (16) travels along the first guide track (12), wherein the carrying element (17) is moveable relative to the transport element (16) in a transverse direction (Y) that extends transversely to the movement direction (X), and wherein the carrying element (17) is guided at the second guide track (13), and
a control unit configured to control the linear motors (11) for moving the transport unit (14) along the first guide track (12).

2. The transport system (10) according to claim 1,
**characterized in that** the second guide track (13) is circular in top view and is in particular a closed circle in top view.

3. The transport system (10) according to claim 1 or 2,
**characterized in that** the first guide track (12) has straight and/or curved track segments.

4. The transport system (10) according to any one of the preceding claims, **characterized in that** a distance (d) in the transverse direction (Y) between the first guide track (12) and the second guide track (13) is variable along the guide tracks (12, 13).

5. The transport system (10) according to any one of the preceding claims, **characterized in that** the carrying element (17) is rotatable relative to the transport element (16) about an axis which is normal to a plane of movement defined by the movement direction (X) and the transverse direction (Y).

6. The transport system (10) according to any one of the preceding claims, **characterized in that** the first and/or second guide tracks (12, 13) are closed tracks.

7. The transport system (10) according to any one of the preceding claims, **characterized in that** the second guide track (13) comprises a rail, and the carrying element (17) has rollers (18) that roll along the rail, wherein the carrying element (17) particularly has at least one roller (18) on opposite sides of the rail.

8. The transport system (10) according to any one of the preceding claims, **characterized in that** one of the carrying element (17) and the transport element (16) comprises a long hole (19), and the other one of the carrying element (17) and the transport element (16) comprises a pin (20) that extends into the long hole (19) to permit the relative movement of the carrying element (17) to the transport element (16) in the transverse direction (Y).

9. The transport system (10) according to any one of the preceding claims, **characterized by** two of the transport units (14) which together are a pair (15) of transport units, wherein the pair (15) of transport units travels along the guide tracks (12, 13) in synchronization with a predetermined gap (g) being maintained between the two transport units (14).

10. The transport system (10) according to claim 9,
**characterized in that** the predetermined gap (g) is defined between the carrying elements (17) of the pair (15) of transport units.

11. The transport system (10) according to claim 9 or 10,
**characterized in that** the first guide track (12) has straight and curved track segments, wherein the control unit is configured to control the linear motors (11) to decelerate the transport units (14) at a transition from a straight track segment to a curved track segment and to accelerate the transport units (14) at a transition from a curved track segment to a straight track segment.

12. A method of operating a transport system (10), in particular a multi-carrier-system, the transport system (10) comprising
a plurality of linear motors (11), which are arranged in a row and have a first guide track (12),
a curved second guide track (13), wherein the curvature of the second guide track (13) is constant,
at least one transport unit (14) which has a transport element (16) that is movable in a movement direction (X) along the first guide track (12) by means of the linear motors (11), and a carrying element (17) configured to be moved along with the transport element (16) in the movement direction (X) as the transport element (16) travels along the first guide track (12), wherein the carrying element (17) is moveable relative to the transport element (16) in a transverse direction (Y) that extends transversely to the movement direction (X), and wherein the carrying element (17) is guided at the second guide track (13), and
a control unit, wherein the method comprises:
controlling the linear motors (11) for moving the transport unit (14) along the first guide track (12).

13. The method according to claim 12,
**characterized in that** the transport system (10) comprises at least two of the transport units (14) which together are a pair (15) of transport units, wherein the method comprises
controlling the linear motors (11) so as to move the pair (15) of transport units to travel along the guide tracks (12, 13) in synchronization with a predetermined gap (g) being maintained between the two transport units (14), in particular between the carrying elements (17) of the pair (15) of transport units.

14. The method according to claim 12 or 13,
**characterized in that** the first guide track (12) has straight and curved track segments, wherein the method comprises
controlling the linear motors (11) to decelerate the transport units (14) at a transition from a straight track segment to a curved track segment and to accelerate the transport units (14) at a transition from a curved track segment to a straight track segment.
